# EUROPÄISCHE PATENTSCHRIFT

(11) **EP 0 374 198 B1**
(45) Veröffentlichungstag und Bekanntmachung des Hinweises auf die Patenterteilung: **19.04.1995**
(21) Anmeldenummer: 89902516.7
(22) Anmeldetag: 21.02.1989
(51) Int. Cl.: A62D 3/00, B01J 19/24, C10M 175/00

(54) **VERFAHREN UND VORRICHTUNG ZUM ABTRENNEN VON SCHADSTOFFEN**
PROCESS AND DEVICE FOR SEPARATING HARMFUL SUBSTANCES
PROCEDE ET DISPOSITIF DE SEPARATION DE SUBSTANCES NOCIVES

(30) Priorität: 15.06.1988 DE 3820317; 13.12.1988 DE 3841844
(43) Veröffentlichungstag der Anmeldung: 27.06.1990
(73) Patentinhaber: Schön, Christian O., D-77855 Achern (DE)
(72) Erfinder: Schön, Christian O., D-77855 Achern (DE)
(86) Internationale Anmeldenummer: EP8900160
(87) Internationale Veröffentlichungsnummer: WO8912482

(56) Entgegenhaltungen:
- EP-A- 0 184 342
- DE-A- 3 224 114
- DE-A- 3 400 776
- DE-A- 3 404 053
- DE-A- 3 638 606
- DE-A- 3 703 110
- GB-A- 716 814
- Revue Générale de l'Electricité, Nr. 8, September 1987, Paris, FR; J.-P. Groo: "Destruction des PCB: procédés en cours de développement", Seiten 156-162

## Beschreibung

Die Erfindung betrifft ein Verfahren und eine Vorrichtung zum Behandeln von umweltbelastende Bestandteile enthaltenden fließfähigen organischen Medien, insbesondere von Kohlenwasserstoffe enthaltenden Abfallstoffen, für eine getrennte Entsorgung und/oder weitere Aufbereitung dieser Bestandteile in verwertbare Produkte. Dabei sind u.a. Medien wie Chlorkohlenwasserstoff (CKW) und Schwefel enthaltende Abfallstoffe einschließlich hochtoxischer Stoffe gemeint.

Außer den genannten Stoffen seien unter fließfähigen Medien auch fließfähig gemachte und flüssige Abfallstoffe schlechthin verstanden, die zusammen mit unerwünschten giftigen und umweltschädlichen Bestandteilen wiederverwertbare Rohstoffe enthalten, ebenso wie chlor- und schwefelhaltige Kohlenwasserstoffverbindungen, sowie auch Sumpfprodukte, die als Destillationsrückstände bei bekannten Aufbereitungsverfahren anfallen und weiter aufbereitet werden sollen.

Bei der Aufbereitung derartiger Medien - sofern dies bisher überhaupt möglich ist - fallen äußerst schädliche und umweltfeindliche Stoffe an, wie z.B. Chlor, Dioxine, polychlorierte Biphenyle (PCB), polyaromatische Hydrocarbone (PAH) oder dgl., aber auch mineralischen Ölprodukten beigegebene Additive, wie Mangan, Wolfram, Eisen oder Stabilisatoren usw., die alle sehr schwer und oft überhaupt nicht von den aufzubereitenden Produkten getrennt werden können. Andere Abfallstoffe wieder enthalten im wesentlichen nur derartige giftige Stoffe, die aber für eine problemlose Entsorgung nicht voneinander getrennt, d.h., in die einzelnen Bestandteile zerlegt werden können, die dann für sich leichter zu entsorgen wären oder ggf. in andere Produkte verwandelt werden könnten. Es ist deshalb immer noch nötig, viele hunderttausend Tonnen derartiger Stoffe pro Jahr im Meer zu verklappen, daa z.B. verschiedene Chlorkohlenwasserstoffe (CKW), wie z.B. spezielle Dioxine, nicht aufbereitet werden können.

Der hierdurch entstehende Umweltschaden ist unermeßlich und nimmt immer mehr zu. Außerdem werden hierbei wertvolle Rohsstoffe vernichtet.

Um dies zu vermeiden, wurde bereits versucht, diese Stoffe aufzubereiten. Dies ist aber bislang nur sehr mangelhaft und unter großem und unwirtschaftlichen Aufwand gelungen.

Es ist z.B. bekannt, durch das s.g. Meinken-Verfahren unerwünschte Bestandteile aus dem Altöl mittels Schwefelsäure herauszuholen. Dabei fallen ca. 34 % Säureteer und andere schwer zu entsorgende Abfälle an, die entsorgt werden müssen. Bei Pyrolyseöl, welches besonders giftig ist, wurde versucht, in s.g. Batch-Anlagen in Autoklaven unter Zusatz von Natrium die in diesem Öl enthaltenen hochgiftigen Dioxine in Kochsalz zu verändern. Die Versuche waren nicht sehr erfolgreich. Auch stellte sich das Verfahren als außerordentlich unwirtschaftlich heraus.

Es ist ferner ein Verfahren bekannt, mittels welchem zu unerwünschten Ablagerungen neigende Flüssigkeiten durch Mikrowellen erhitzt werden (DE 32 24 114 A1). Dadurch soll eine solche Ablagerungstendenz vermieden werden. Das Verfahren soll insbesondere bei der Aufarbeitung von Alröl im Wege einer Crackreaktion Anwendung finden. Das hier gezeigte Verfahren ist jedoch nicht geeignet, das der vorliegenden Erfindung zugrunde liegende Problem zu lösen.

Der Erfindung liegt die Aufgabe zugrunde, ein Verfahren zu entwickeln und eine Vorrichtung zur Durchführung dieses Verfahrens zu schaffen, wodurch derartige schädliche und umweltbelastende Bestandteile dieser Medien voneinander und von noch regenerierbaren Anteilen einwandfrei und wirtschaftlich getrennt werden, so daß sie einzeln separiert und je nach dem, um welche Stoffe es sich handelt oder welche wirtschaftlichen Interessen bestehen, in leicht entsorgbare Stoffe oder verwertbare Produkte umgewandelt und aufbereitet werden können und auch Sumpfprodukte aus Destillationsrückständen aufarbeiten zu können.

Die Erfindung löst das Problem dadurch, daß das fließfähige Medium in einem Einrohrreaktor, dessen Verhältnis Länge zu Durchmesser wenigstens 200 : 1 beträgt und der eine Länge zwischen 10 und 2000 m, vorzugsweise zwischen 30 und 700 m, und einen Durchmesser zwischen 5 und 5000 mm, vorzugsweise zwischen 25 und 150 mm aufweist, in einem einzigen Erwärmungszyklus kontinuierlich in eine gasförmige Phase überführt wird, wobei unter gezielter Steuerung der Energiezufuhr und der Strömungsgeschwindigkeit aufgrund von Turbulenzen ein homogener Zustand über den gesamten Rohrquerschnitt erreicht wird, so daß jedes Molekül oder Atom gleichen Reaktionsbedingungen ausgesetzt ist und eine gesteuerte Spaltung, d.h. Auf- bzw. Abtrennung von Schadstoffteilen der Moleküle erreicht wird, daß erst am Ende des Erwärmungszyklus das gesamte Produkt nach Erreichen der höchsten Temperatur einem Kondensationsprozeß zugeführt wird und am Reaktorende eine Abscheidung der Rückstände erfolgt.

Vom gleichen Erfinder wurde zwar bereits vorgeschlagen, zur Aufbereitung von Altöl einen Einrohrreaktor zu verwenden. (DE-A-3 638 606 und DE-A-3 703 110). In dem hier mehrstufigen Reaktor wird das Altöl stufenweise immer höher erwärmt. Das in der jeweiligen Stfe freiwerdende Gas wird nach jeder Stufe abgezogen und einem Destillationsprozeß zugeführt, wobei in jeder Stufe das der Temperatur dieser Stufe entsprechende Produkt abdestilliert wird. Es handelt sich also hier um ein rein destillatives Trennen der Moleküle aber nicht um ein durch eine Reaktion ausgelöstes Ab- oder Auftrennen gemäß der vorliegenden Erfindung.

Im Gegensatz zu den oben genannten bekannten Verfahren, die in der Flüssigphase arbeiten, arbeitet das erfindungsgemäße Verfahren in der Gasphase. Dabei sei unter "Gasphase" ein Zustand verstanden, der auch im Gas enthaltene feinste dampfförmige Teilchen mit einschließen kann, die jedoch stark verwirbelt sind. Dem Reaktor kann das Medium dabei bereits in einem dampfförmigen Zustand zugeführt werden. Durch die Vergasung wird die Förderwirkung durch den Reaktor im wesentlichen beschleunigt. Der Erfinder hat also erkannt und bestätigt gefunden, daß es durch die Verwendung eines Einrohrreaktors möglich ist, das bisher praktisch ungelöste oder nur unbefriedigend gelöste Problem der umweltfreundlichen Entsorgung derartiger giftiger und schädlicher Substanzen, wie gefährliche Chlorkohlenwasserstoffverbindungen, z.B. Dioxin, PCB und dgl. in wirtschaftlicher und umweltfreundlicher Weise zu lösen und dabei auch noch wertvolle Rohstoffe Rohstoffe zu erhalten, bzw. Schwefel zu eliminieren.

Der Einrohrreaktor gestattet es, das strömende Medium mit einer außerordentlichen Produkthomogenität über den ganzen Rohrquerschnoitt auf Zehntel Grade Celsius genau und durch Regeln der Strömungsgeschwindigkeit bei gegebener Rohrlänge auf eine Verweilzeit des Produktes bei einer bestimmten Temperatur auf Millisekunden genau zu steuern und dabei vorzugsweise unter Vakuum, ggf. auch bei Atmosphärendruck oder Überdruck, in die genannte gasförmige Phase überzuführen bzw. einströmendes Gas aufzuarbeiten und ggf. im Gas enthaltene Feststoffanteile mit aufzuarbeiten. Es kommt hierbei der einem solchen Einrohrreaktor innewohnende Vorteil des großen Verhältnisses zwischen Reaktorwand und Reaktorvolumen zum Tragen. Dadurch wird der günstige Energiefluß und die hohe Reaktionsgeschwindigkeit gewährleistet, d.h., der Durchlauf des Mediums durch das Rohr ist sehr schnell, was wiederum zu einer sensibleren Anlage mit der außerordentlich genauen Regelung für Temperatur und chemische Zusätze führt. Wird Wärmeenergie zugeführt, so können zweckmäßigerweise in eine den Reaktor umgebende Heizkammer nicht aggressive Heißgase geleitet werden. Es sei ausdrücklich darauf hingewiesen, daß in einem solchen Einrohrreaktor keinerlei mechanische Förderung, wie z.B. durch Schnecken, stattfindet.

Die mittlere Strömungsgeschwindigkeit im Rohr ist relativ hoch. Sie kann zwischen 10 m/s und 300 m/s und höher liegen, vorzugsweise zwischen 30 m/s und 180 m/s.

Unter Verweilzeit ist dabei die Zeit zu verstehen, während welcher das Produkt den Reaktor durchströmt und einer bestimmten Einflußgröße - insbesondere einer bestimmten Temperatur oder Energie - ausgesetzt ist. Dabei können bestimmte Bestandteile, die nicht vollständig in den gas- oder dampfförmigen Zustand überführt sind oder die sich während des Prozesses durch Zusatz von Chemikalien bilden, sich im Rohr langsamer bewegen. Der Einrohrreaktor ermöglicht es also, daß jedes Teilchen, bis herunter zum Molekül, absolut gleichen einstellbaren Einflußgrößen ausgesetzt werden kann. Dadurch kann gezielt auf die Moleküle und Atome des Produktes eingewirkt werden, wodurch es ermöglicht wird, derartige Produkte, die außerordentlich hochgiftige und damit schädliche Bestandteile wie z.B. Dioxine, PCB, PAH, Chlor, Schwefel u. dgl. enthalten, umweltfreundlich zu entsorgen und zu einem großen Teil in wieder aufbereitbare Produkte zu verwandeln.

Gemäß einer ersten Möglichkeit (Fall 1) der Anwendung des erfindungsgemäßen Verfahrens für Medien mit wiederaufbereitbaren Anteilen, z.B. von verunreinigtem Altöl, von denen unerwünschte schädliche Bestandteile abgetrennt werden sollen, werden in weiterer Ausbildung der Erfindung die Einflußgrößen auf ein Niveau unterhalb der Aktivierungsenergie für eine Bindungslösung innerhalb der Moleküle und Atome der wiederaufbereitbaren Anteile angehoben.

Es werden also die Molekülketten des verwertbaren Anteils (Produkt) nicht gebrochen (gecrackt), sondern lediglich die Molekülbestandteile und Atome der unerwünschten und schädlichen Heteroanteile abgestoßen, welche weniger fest an die eigentlichen Produktmoleküle gebunden sind, oder sie werden reaktionsfreudiger. Dabei wird die Bewegungsgeschwindigkeit in den Freiheitsgraden der Moleküle, das heißt, Translation, Rotation und Oszillation, so weit erhöht, bis sich die schädlichen Bestandteile loslösen, während die wertvollen langen, das eigentliche Produkt bildenden Molekülketten erhalten bleiben und weiter aufbereitet werden.

Gemäß einer zweiten Möglichkeit (Fall 2) speziell für Medien bestehend aus im wesentlichen umweltfeindlichen Bestandteilen, die in leicht zu entsorgende und in verwertbare umwandelbare Anteile zerlegt werden sollen, werden erfindungsgemäß die Einflußgrößen auf ein Niveau über die Aktivierungsenergie für eine Bindungslösung innerhalb des Medienmoleküls und deren Atomen angehoben. Vorzugsweise kann diese Anhebung der Einflußgrößen stufenweise auf die jeweils für die Trennung eines bestimmten Bestandteils erforderliche Höhe erfolgen, wobei nach Abschluß der Reaktion Einflußgrößen je nach den Prozeßbedingungen auch wieder gesenkt werden können. Im Gegensatz zu Fall 1 werden hier die zu entsorgenden Medien gezielt gebrochen (gecrackt). Dabei ist es durch die bei der Verwendung eines Einrohrreaktors oben geschilderten Vorteile möglich, die Trennung der einzelnen Bestandteile ganz gezielt vorzunehmen, so daß jedes Molekül individuell behandelt werden kann.

In beiden Fällen erfolgt die Überführung in die Gasphase vorzugsweise unter konstantem Vakuum. Dadurch findet schon eine Teilverdampfung langsam oder ggf. sogar schlagartig statt. Nach Abschluß der Reaktion kann dann das Vakuum wieder entsprechend den Erfordernissen variiert werden. Bei bestimmten Medien, wie z.B. Benzin, muß jedoch die Überführung in die Gasphase unter Überdruck erfolgen.

Beim Eintritt in den Reaktor kann das Medium verdüst werden. Zur Unterstützung der Anhebung des Energieniveau's und damit der Bewegungsgeschwindigkeit der Moleküle kann in beiden Fällen zusätzlich zu der zur Überführung in die Gasphase vorhandenen Energie noch weitere Energie zugeführt werden, wie z.B. durch Infrarotstrahlung, elektromagnetische Wechsel- oder Gleichspannung oder andere für diesen Zweck geeignete bekannte Verfahren. Dabei kann eine noch vorhandene Dampfphase in eine überhitzte Phase übergehen. Entscheidend dabei ist, daß die Energie der Moleküle, insbesondere die Temperatur, gezielt auf das gewünschte Niveau eingestellt wird.

Die Erfindung sieht weiterhin in beiden Fällen vor, die abgetrennten schädlichen Bestandteile durch Bindung an entsprechende Chemikalien oder durch katalytische Wirkung in eine leicht zu entsorgende Form überzuführen. Dazu können längs des Einrohrreaktors zur Unterstützung der Bindungslösung zwischen den Molekülen oder innerhalb derselben an einer oder mehreren Stellen Chemikalien eingebracht werden. Hierdurch werden chemische, katalytische oder de-Novo-Reaktionen ausgelöst, und zwar in allgemeinen unterhalb der Vercrackungstemperatur des jeweiligen Produktes. Diese chemischen Reaktionen finden neben den molekularphysikalischen Reaktionen statt, bei denen die Vercrackungstemperatur ganz kurzzeitig überschritten werden kann. Z.B. wurde bei Altöl bei einer Erwärmung auf 400 bis 500°C, d.h. ggf. bis weit über die Vercrackungstemperatur, und bei allerdings außerordentlich kurzer Verweilzeit des Produktes bei dieser Temperatur bis auf Millisekunden genau gesteuert **ohne** jegliche chemischen Zusätze bereits Schwefel und Chlor so weitgehend abgeschieden, daß der verbleibende Rest bereits unterhalb der gesetzlich zulässigen Grenze lag. Z.B. kann Natrium in gelöster Form eingebracht werden, an welches sich das Chlor zu unschädlichem Kochsalz bindet, das dann in Wasser gelöst werden kann. Durch Einführen von fein aufgelösten Metallstäuben, wie z.B. Eisen-, Nickel oder Zinkstaub oder auch von entwässertem Rotschlamm aus der Aluminiumproduktion wird eine Abtrennung von Chlor bewirkt. Ebenso können sich auch s.g. Metallsalze bilden, die allgemein ungefährlich sind oder nach Abscheidung mit relativ einfachen Mitteln in eine ungefährliche Form übergeführt werden können. Damit sind sie leicht deponierbar und können leicht entsorgt werden.

Durch Einspeisen von reduzierenden oder oxydierenden Stoffen in den Gasstrom an einer oder mehreren Stellen längs des Reaktors, wie z.B. Wasserstoff, kann auch eine Abtrennung der unerwünschten Bestandteile unterstützt sowie eine Sättigung von chemischen Verbindungen erreicht werden. Bei diesen Verfahren mit Einbringung von Stoffen entweder für eine chemische Bindung oder eine katalytische Wirkung wird besonders durch die dem Einrohrreaktor innewohnenden Vorteile eine kräftige Verwirbelung und dadurch größere Homogenität und damit eine Erhöhung der Reaktionsgeschwindigkeit erzielt. Es können dabei absolut stöchiometrische Verhältnisse eingestellt werden.

Erfindungsgemäß ist es aber auch möglich, anstatt der kostenaufwendigen Chemikalien, wie Natrium, Wasserstoff u. dgl., Abfallstoffe selbst zuzugeben. Hierbei kommen z.B. infrage Stoffe wie Rotmasse aus der Aluminiumproduktion, Steinkohlenfilterasche, Kupferabfälle, Eisenstaubabfälle und viele andere mehr. Hierdurch werden einerseits sehr große Mengen derartiger Chemikalien und damit große Mengen Energie eingespart und andererseits trägt dieses Verfahren weitgehend mit zur Beseitigung derartiger schädlicher Abfallstoffe bei.

Für bestimmte Medien können beide Wege, d.h. Fall 1 und Fall 2 beschritten werden, je nach dem, welche verwertbaren Stoffe daraus gewonnen werden sollen. Bei Behandlung von Pyrolyseöl nach Fall 1 kann z.B. Dieselöl - nach anschließender Hydrierung des von schädlichen Stoffen befreiten Medienstromes - gewonnen werden. Wird es nach Fall 2 behandelt, d.h., gecrackt, dann können ganz gezielt bestimmte Bestandteile in neue verwertbare Produkte wie Äthan, Methan, Propan und dgl. verwandelt werden und schädliche bei der Zerlegung angefallene Restanteile werden, wie beschrieben, entsorgt. Abgetrenntes Chlor kann z.B., wie beschrieben, an Metallsalze gebunden werden. Es besteht aber auch die Möglichkeit, Wasserstoff zuzuführen und das Chlor in Salzsäure zu verwandeln. Der billige Wasserstoff bildet mit Chlor sehr leicht eine Reaktion, weil er bereits Gas und molekular gelöst ist - im Gegensatz zu den wesentlich gröberen Metallsalzen. Das Chlor wird also weggerissen und damit das Dioxin zerstört! Nun ist aber Salzsäure besonders bei hohen Temperaturen äußerst aggressiv und würde jeden normalen Metallbehälter, z.B. einen Autoklaven innerhalb kurzer Zeit zerstören, es sei denn, er ist aus einem hochwertigen säurebeständigen Metall, z.B. Titan hergestellt. Die enorm hohen Kosten verbieten aber eine Anwendung derartiger Metalle.

Bei dem erfindungsgemäßen Verfahren kann aber unter Verwendung eines Einrohrreaktors ein besonders vorteilhafter erfindungsgemäßer Verfahrensschritt Anwendung finden, durch welche die an sich zweckmäßige und leicht durchzuführende Umwandlung in Salzsäure und damit die Zerstörung von Dioxin dennoch ermöglicht wird. Er besteht darin, daß nach der Einspeisung von Wasserstoff in den rohrförmigen Reaktor nach einer relativ kurzen Strecke (ca. 2 bis 30 m) Neutralisationsmittel wie z.B. Kalkprodukte in gelöster Form in das Rohr zugegeben werden, welche die Salzsäure sofort z.B. zu dem ungefährlichen Calziumchlorid neutralisieren. Es braucht also lediglich diese kurze Rohrstrecke mit einer dünnen Schicht aus Titan oder selbst aus dünnem Titanblech hergestellt zu werden. Es können somit in einem solchen Einrohrreaktor gefährliche Reaktionen eingeleitet werden, die aufgrund der großen Turbulenzen nur auf wenigen Metern stattfinden.

Zur Unterstützung der Abtrennung der schädlichen Bestandteile kann ferner in weiterer Ausbildung der Erfindung Elementarteilchenbeschuß z.B. durch energiereiche Elektronen-, Protonen- oder Neutronenstrahlung im Megaradbereich, z.B. mit Beschleunigungsspannungen von 150 bis 350 kV erfolgen. Dabei kann eine Ionisation der Moleküle der schädlichen Bestandteile stattfinden, was eine Ablösung der fremden Moleküle bzw. Atome weiterhin erleichtert. Eine Ionisation kann auch durch Hochspannung in der Größenordnung von 10 000 bis 100 000 Volt erreicht werden. Eine weitere Möglichkeit zum Einbringen zusätzlicher Energie besteht erfindungsgemäß darin, daß das Medium mittels Laser bestrahlt wird.

Ebenso ist es möglich, eine Ionenimplantation durchzuführen. Dies führt zu der weiteren erfindungsgemäßen Möglichkeit, die Abtrennung und Zerlegung von Schadstoffen dadurch zu fördern daß das strömende Medium durch geeignete Ionisation, d.h. elektromagnetische Schwingungserregung über dem Megahertzbereich, vorzugsweise im Gigahertzbereich, ggf. sogar im Terahertzbereich, in Plasma verwandelt wird. Dann erübrigt sich der Einsatz von Chemikalien entweder ganz oder es können wegen der größeren Reaktionsfreude zumindest billigere Chemikalien verwendet werden. Auch braucht man nicht über den Vercrackungspunkt zu gehen. Die Trennung wird wesentlich erleichtert.

Die Umwandlung in Plasma kann vor oder im Reaktor erfolgen. Die durch das erfindungsgemäße Verfahren abgetrennten Bestandteile werden dann in weiteren an sich bekannten Verfahrensstufen separiert. Hierzu bieten sich viele Möglichkeiten an.

Durch das erfindungsgemäße Verfahren wird also nicht nur eine Wiederaufbereitung des fließfähigen verunreinigten Mediums vorbereitet, sondern es wird durch die Aufspaltung im Einrohrreaktor und die nachgeschaltete Separation der unerwünschten Bestandteile und durch die Möglichkeit der Umwandlung dieser Teile in relativ harmlose Verbindungen eine Umweltverschmutzung und eine Vergeudung wertvoller Rohstoffe vermieden. Die Qualität vorhandener derartiger Produkte wird verbessert oder es werden neue brauchbare Produkte geschaffen.

Wegen der im Produktgemisch vorhandenen schweren Partikel besteht die große Gefahr, daß die Kondensationseinrichtungen, insbesondere der Kühler, schnell verschlammen, stark verkrusten und sich zusetzen. Dies gilt insbesondere bei der Trennung und Aufarbeitung von Pyrolyseöl, CKWs, PAHs und PCBs und bei Sumpfprodukten, wie sie bei der Aufarbeitung bzw. Destillation von Rückständen aus der Chemie, insbesondere Petrochemie, sowie bei Recycling von Abfallstoffen, z.B. CKWs entstehen und die vor dem Einbringen in den Einrohrreaktor aufgeschmolzen werden und anschließend wenigstens zum Teile in die Gasphase übergeführt werden, wobei diese Rückstände besonders nach dem Fall zwei mit Anhebung der Einflußgrößen über die Aktivierungsenergie für eine Bindungslösung der Moleküle aufgearbeitet werden können. In weiterer Ausbildung der Erfindung wird deshalb das organische Medium im Durchflußverfahren unter Erwärmung in einem einzigen Erwärmungszyklus auf die maximale Behandlungstemperatur in die gasförmige Phase überführt. Der Begriff "Erwärmungszyklus" schließt dabei ein, daß die Erwärmung im Reaktorrohr z.B. auch stufenweise erfolgen kann oder daß mehrere Rohrteile vorhanden sind, die im Falle von sie umgebenden Heizkammern je im Gegenstrom von dem Aufheizmittel, z.B. erwärmter Luft, umströmt werden. Entscheidend ist, daß erst am Ende des Erwärmungszyklus das gesamte Produkt nach Erreichen der höchsten Temperatur dem oder den Kondensatoren zugeführt wird. Vorzugsweise wird das Produkt nach Durchströmen eines Abscheiders für Rückstände durch Einspritzkondensation kondensiert.

Dabei wird vorzugsweise das Produkt in mehreren aufeinanderfolgenden Stufen fraktionierend kondensiert, wobei in jeder folgenden Stufe auf eine dem jeweils gewünschten Kondensat entsprechende niedrigere Temperatur abgekühlt wird. Es wird also das Produkt in seiner Gesamtheit, d.h. total destilliert, und nicht, wie bei der bekannten fraktionellen Destillation, stufenweise. Der Dampf des Destillates kondensiert dann an den im Wärmeaustauscher (Kühler) abgekühlten Tropfen des Produktes, die im Kondensator versprüht werden, d.h., das Produkt wird selbst im Kreislauf zum Abkühlen benutzt, der Wärmeaustausch findet in der flüssigen Phase des Produktes statt.

Die den Einrohrreaktor umgebende Heizkammer kann mittels durch einen Brenner erhitzter Gase, die evtl. durch einen Ventilator umgewälzt werden, aufgeheizt werden. Es kann aber auch jede andere an sich bekannte Form einer thermischen Erwärmung Verwendung finden. Auch kann die Möglichkeit einer Abkühlung auf ein niedrigeres Temperaturniveau vorgesehen sein, z.B. wenn hydriert wird. Zur Erzielung einer besseren Produkthomogenität kann es im Falle größerer zu verarbeitender Mengen zweckmäßig sein, mehrere Stränge paralleler Einrohrreaktoren vorzusehen, die das gas- bzw. dampfförmige Produkt alle in einen gemeinsamen Abscheider und weiter zur Kondensation fördern. Für jeden dieser Stränge gelten die gleichen Parameter, wie Länge, Durchmesser, Strömungsgeschwindigkeit, Temperatur usw. wie eingangs erwähnt. Da die Heizkammern relativ teuer sind, wird erfindungsgemäß vorgeschlagen, für diese parallelen Stränge von Einrohreaktoren eine gemeinsame Heizkammer zu verwenden, die alle umschließt. In weiterer Ausbildung dieses Vorschlages werden sämtliche von der Heizkammer umschlossenen Einrohrreaktorstränge bezüglich wenigstens einer der Einflußgrößen Temperatur, Durchflußmenge oder auch eines chemischen Sollwertes, wie z.B. pH-Wert, einzeln auf jeweils gleiche Austrittswerte geregelt. Es besteht sonst die Gefahr, daß wegen geringer Unterschiede an den Rohrinnenflächen, z.B. durch Schweißnähte oder durch unterschiedliche Anbackungen bei problematischen Produkten oder auch durch nicht gleichmäßig gebogene Rohre an den Bögen das Produkt nicht homogen aus den einzelnen Strängen in den gemeinsamen Abscheider austritt.

Zur Reinigung des Rohrreaktors können in vorteilhafter Weise Metallkugeln verwendet werden, die entweder von Zeit zu Zeit oder auch kontinuierlich mit dem Öl durch den Reaktor durchlaufen oder wieder ausgeschieden werden.

In weiterer erfindungsgemäßer Ausbildung kann zur Kontrolle einer ausreichenden Strömungsgeschwindigkeit, um Ablagerungen an der Rohrinnenwand zu vermeiden, der von der Strömungsgeschwindigkeit abhängige Abrieb an der Rohrinnenwand durch Zählung mittels eines Geigerzählers, der an einer radioaktiv bestrahlten Stelle des Rohres abgetragenen Partikel gemessen werde. Eine hierfür ausreichende Strömungsgeschwindigkeit ist dann erreicht, wenn die Werte des Geigerzählers den ohnehin vorhandenen Grundwert übersteigen.

Zur Vermeidung von Koksanbackungen können erfindungsgemäß auch in das Öl und/oder in das Rohr bis zur Resonanz steigerbare mechanische Schwingungen eingeleitet werden. Diese Schwingungen können als Interferenz-Schwingungen überlagert oder als Ultra- oder Infraschall im Reaktor erzeugt werden. Sie können als Längs- oder Querschwingungen ausgebildet sein.

Durch das erfindungsgemäße Verfahren können auch aus Heiz- oder Dieselölen umweltbelastende Schadstoffe entfernt werden.

Eine zur Durchführung des erfindungsgemäßen Verfahrens besonders vorteilhafte Vorrichtung weist die Kombination der folgenden Merkmale auf:
a) ein Einrohrreaktor bestehend aus wenigstens einem Rohr, das ein Verhätnis Länge zu Durchmesser von wenigstens 200 : 1, vorzugsweise zwischen 400 : 1 und 3000 : 1 hat, dessen Länge zwischen 10 und 2000 m, vorzugsweise zwischen 30 und 700 m, und dessen Durchmesser zwischen 5 und 500 mm, vorzugsweise zwischen 25 und 150 mm liegt,
b) eine Einrichtung zum Fördern des Mediums durch den Einrohrreaktor,
c) eine Einrichtung zum Herbeiführen eines Energieaustausches über die Reaktorrohrwand,
d) Einrichtungen zum Regeln und Steuern wenigstens der Parameter Temperatur und Strömungsgeschwindigkeit des Mediums, derart, daß die höchste Produkttemperatur am Ende des Reaktors liegt,
e) ein am Reaktorende angeschlossener Rückständeabscheider und
f) wenigstens ein im Bereich der höchsten Produkttemperatur angeordneter Kondensator.

Die Druckdifferenz kann durch eine Druckpumpe oder durch eine am Ende des Systems vorgesehene Vakuumpumpe oder durch beides hergestellt werden. Als Einrichtung zum Herbeiführen des Energieaustausches über die Reaktorwand kann entweder eine Heizkammer dienen, durch welche der Einrohrreaktor geführt ist, oder dieser ist direkt von einem rohrförmigen Außenmantel mit Abstand umgeben, wobei Mittel zum Einbringen eines Wärmeträgermediums zwischen beide Rohre vorgesehen sind. Der Rohrdurchmesser des Einrohrreaktors kann längs des Reakrors unterschiedlich sein, z. B. kann er in Fließrichtung des Mediums zunehmen.

Zum Herbeiführen chemischer Reaktionen zum Trennen von Bestandteilen des Produktes kann es erwünscht sein, nacheinander längs des Einrohreaktors verschiedene Chemikalien einzudosieren, die jedoch bei unterschiedlichen Temperaturen optimal reagieren. Zu diesem Zweck wird erfindungsgemäß für eine Vorrichtung mit nur einem Einrohrreaktorstrang vorgeschlagen, diesen von wenigstens zwei aufeinanderfolgenden mit in Strömungsrichtung unterschiedlichen Temperaturen temperierbaren Heiz- bzw. Kühlkammern zu umgeben und vor jeder Kammer eine Dosiervorrichtung zum Eindosieren von Chemikalien in den jeweiligen Einrohreaktorteil vorzusehen. Eine derartige Dosierung kann mit außerordentlicher Genauigkeit und in jeweils kleinsten Mengen erfolgen, d.h., jeweils gerade so viel, wie das mit relativ hoher Geschwindigkeit vorbeiströmende gas- bzw. dampfförmige Produkt benötigt. Dies ermöglicht also z.B. absolut stöchiometrische Reaktionen. Bei der Eindosierung z.B. von Natrium, das bei etwa 200°C reagiert und wegen seiner außerordentlichen Brandgefahr zu den sehr gefährlichen Chemikalien zählt, ergibt sich hierdurch gegenüber den bekannten Verfahren, bei welchen die gesamte Natriummenge auf einmal in große Rührbehälter zugegeben werden muß, ein beträchtlicher Vorteil. Chemikalien können im übrigen auch an anderern Stellen der Vorrichtung, d.h. auch bei mehrsträngigen Reaktoren, eindosiert werden, wie z.B. im, vor oder nach dem Abscheider oder in den Kondensator.

Die Durchflußmenge im Einrohreaktor kann in vorteilhafter Weise auch durch einen Sensor für den Abrieb im Reaktor erfolgen, z.B. durch an sich bekannte radiometrische Messung, Hochfrequenzmessung oder radioaktive Messung über Neutronenabspaltung. Dieser Sensor mißt entweder den Abrieb (Verschleiß) an dem Material des Einrohreaktors selbst oder an einem in das Rohr hineinragenden Pilotmeßstab.
Die in einem Sumpf abgeschiedenen Bestandteile können in Wasser ausgetragen werden, wo sie erstarren. Sie können dann mechanisch zerlegt werden und z.B. in Form von Pellets in der Zementindustrie als Primärbrennstoff verwendet werden.

Die Erfindung ist anhand der Zeichnung näher erläutert.
Darin zeigt
- Fig. 1: im Schema eine Anlage zum Durchführen des erfindungsgemäßen Verfahrens mit zwei Strängen von Einrohrreaktoren und
- Fig. 2: im Schema ausschnittsweise eine Anlage mit einem Strang, der mehrere Temperaturzonen und Dosiermöglichkeiten für Chemikalien aufweist.
- Fig. 3: bis 7 im Schema verschiedene Möglichkeiten der Aufbringung hochfrequenter elektromagnetischer Felder im Reaktor zur Erzeugung von Plasma.

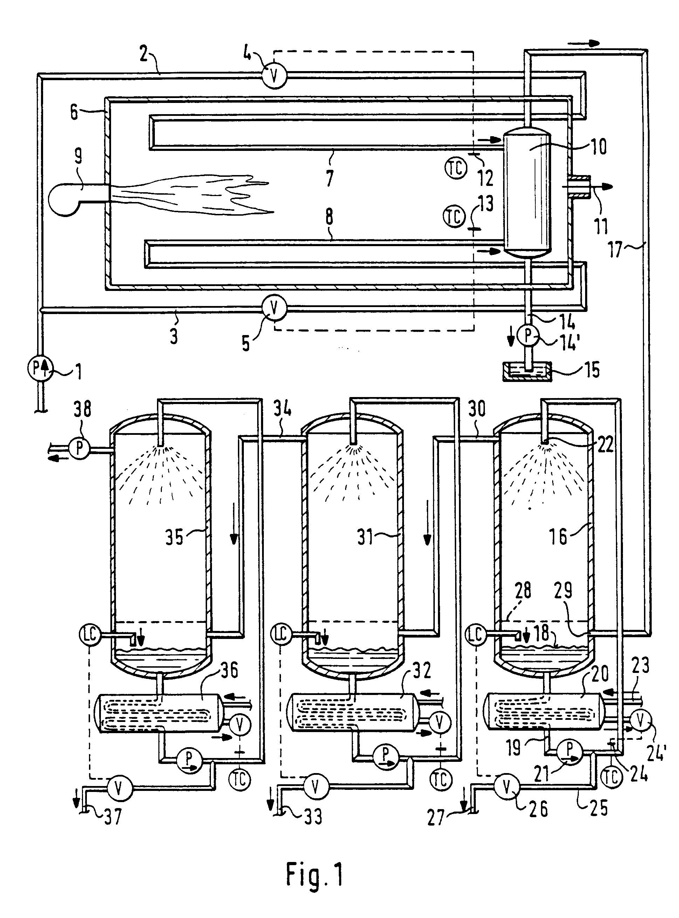

In dem Beispiel einer Anlage nach Fig. 1 wird das mittels einer Druckpumpe 1 über Rohrleitungen 2 und 3 mit Regelventilen 4 und 5 den innerhalb einer Heizkammer 6 angeordneten Einrohrreaktorsträngen 7 und 8 zugeführte Produkt durch die mittels eines Brenners 9 erwärmte Luft so weit erwärmt, daß das Produkt in eine ges- bzw. dampfförmige Phase übergeht und innerhalb des Abscheiders 10, in welche beide Stränge 7 und 8 führen, eine Temperatur von etwa 380°C erreicht. Bei 11 werden die Rauchgase aus der Heizkammer 6 abgeführt. Zwischen den beiden Einrohrreaktorsträngen 7 und 8 und dem Abscheider 10 sind je Regler 12 und 13 angeordnet, welche über die Regelventile 4 und 5 den Mengenstrom im Hinblick auf eine gleich hohe Temperatur beim Austritt aus den jeweiligen Reaktorsträngen bzw. beim Eintritt in den Abscheider regeln. Aus dem Abscheider werden Rückstände über eine Leitung 14 mit Saugpumpe 14' in den Sumpf 15 abgeschieden. Eine Leitung 17 führt das ges- bzw. dampfförmige Produkt in den ersten Einspritzkondensator 16, auf dessen Boden sich im Betrieb ein Kondensatspiegel 18 einstellt. Eine Leitung 19 führt aus dem Boden des Kondensators 16 durch einen Kühler 20 zu einer Pumpe 21, durch welche ein Teil des Kondensates den im oberen Bereich des Kondensators 16 angeordneten Einspritzdüsen 22 zugeführt wird. Das dort versprühte Kondensat bildet Kondensationskerne für das durch die Leitung 17 zugeführte gas- bzw. dampfförmige Produkt. Die Menge des in den Kühler zugeführten Kühlwassers bzw. des temperaturgeregelten Kühlmediums und damit die Temperatur im Kondensator 16 wird mittels eines Reglers 24 geregelt, der auf ein Ventil 24' einwirkt.

In dem vorliegenden Beispiel beträgt die Temperatur in dem ersten Kondensator 16 250°C für die Kondensation z.B. von Grundölen oder Fraktionen. Hinter der Pumpe 21 wird außerdem Kondensat über den Abzweig 25 über ein Regelventil 26, mittels welchem die Höhe des Kondensatspiegels 18 im Kondensator 16 eingestellt wird, zur Entnahme 27 für das gewünschte Kondensat bzw. der Fraktion geführt. Diese Pumpe 21 regelt also das Niveau in dem Kondensator. Es ist aber auch barometrische Aufstellung möglich, bei welcher das Kondensat ohne Hilfspumpe als Fraktion abläuft. Oberhalb der Mündung 29 der Zuleitung 17 im Kondensator 16 ist ein Verteiler 28 für das nach oben strömende gas- oder dampfförmige Produkt angeordnet, um ein möglichst homogenes Durchfluten des Produktdampfes, d.h. parallele Ströme zu erreichen. Diese Durchströmung des Produktdampfes erfolgt vorteilhaft wie dargestellt im Gegenstromprinzip, kann jedoch auch im Gleichstrom oder Kreuzstrom erfolgen. Das nicht kondensierte Produkt wird über eine Leitung 30 in den zweiten Einspritzkondensator 31 mit Kühler 32 geführt, deren Aufbau identisch mit dem des Kondensators 16 mit Kühler 20 ist. In diesem Kondensator wird die Temperatur beispielsweise auf 180°C geregelt, d.h. niedriger als im ersten Kondensator. Er dient für die Kondensation z.B. von Neutralöl oder Fraktionen. Das Kondensat bzw. die Fraktion wird bei 33 entnommen. Eine Leitung 34 führt aus diesem Kondensator in den ebenfalls wieder baugleichen Kondensator 35 mit Kühler 36, der auf eine Temperatur von 20°C für die Entnahme von Gasöl oder Fraktionen bei 37 herabgekühlt wird.

Die jeweiligen Temperaturen in den Kondensatoren werden bestimmt durch wirtschaftliche Gründe oder aus verfahrenstechnischen bzw. chemischen Gründen, welche zur Eliminierung umweltbelastender Stoffe verlangt werden. Im oberen Bereich dieses letzten Kondensators 35 ist eine Saugpumpe 38 zur Erzeugung eines Unterdruckes in dem gesamten System vorgesehen.

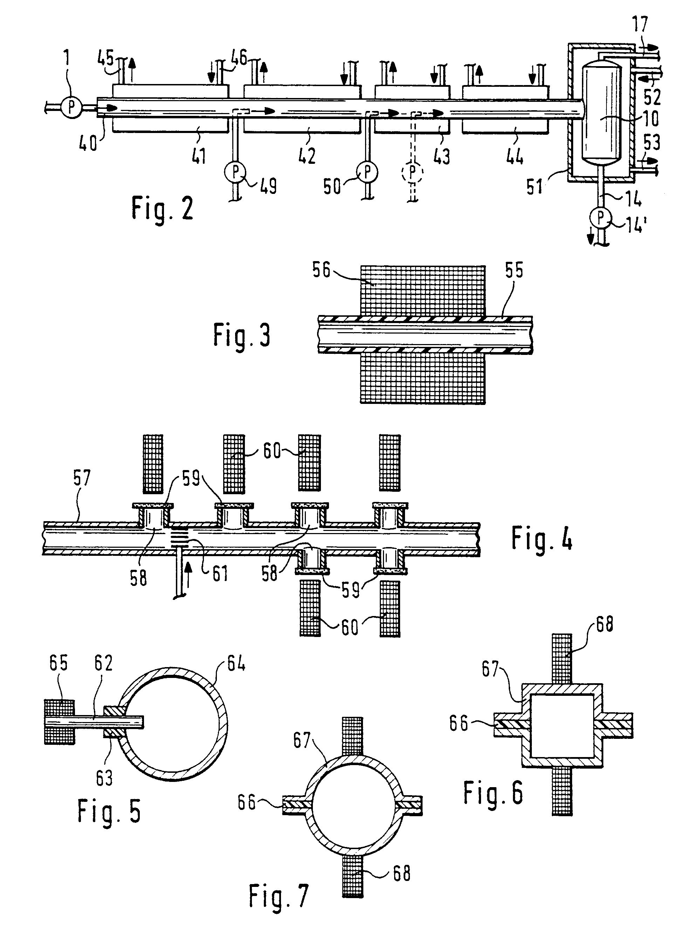

In der einsträngigen Anlage nach Figur 2 wird das Produkt durch die Druckpumpe 1 in den Einrohrreaktor 40 gefördert. Dieser ist in Zonen unterschiedlicher Temperierbarkeit unterteilt, die je durch eine besondere Temperierkammer 41, 42, 43, 44 beheizt oder auch gekühlt werden können. Eine Kühlung kommt z.B. dann infrage, wenn aus Prozeßgründen in einer Zone gegenüber der vorhergehenden erniedrigt werden soll oder wenn exotherme Wärme, z.B. beim Hydrieren, abgeführt werden soll. Als Wärmeträger können Rauch- oder andere Gase jeweils über einen Heiz- oder Kühlkreislauf 45 bei 46 zugeführt werden. Vor den Temperierzonen 42 und 43 sind jeweils Dosierleitungen mit Dosierpumpen 49 bzw. 50 zum Eindosieren von Chemikalien in den bestimmten Temperaturbereich dieser Zone vorgesehen. Wie beispielsweise in der Temperierzone 43 gezeigt, kann auch unmittelbar innerhalb einer Temperierzone eindosiert werden. Der Reaktor 40 führt dann in den Abscheider 10, der in dem vorliegenden Beispiel von einer Temperierkammer 51 mit Zulauf 52 und Ablauf 53 eines Temperierkreislaufes umgeben ist. Aus dem Abscheider 10 führt die Leitung 17 das dampf- bzw. gasförmige Produkt zu den Kondensatoren, wie sie in Figur 1 beschrieben sind.

Als Wärmeträger können in beiden Beispielen ebenso z.B. Heißwasser, Thermoöle bis ca. 340°C, Salzschmelze zwischen 130 und 500°C, flüssige Metalle zwischen 130 und 700°C dienen. Zum Aufheizen dieser Wärmeträger kann jede an sich bekannte thermische Heizmöglichkeit verwendet werden.

In den Figuren 3 bis 7 sind verschiedene Möglichkeiten der Aufbringung hochfrequenter Felder zur Erzeugung von Plasma im Reaktor dargestellt.

In dem Beispiel nach Fig. 3 ist ein Reaktorrohr 55 oder ein entsprechendes Rohrteil aus Kunststoff, z.B. Teflon, von einer Magnetspule 56 umgeben. Das Eisenrohr 57 nach Fig. 4 weist Fenster 58 mit Quarzabdeckungen 59 auf, durch welche Magnetspulen 60 auf das Medium wirken. Die Fenster können entweder, wie dargestellt, einseitig vorgesehen sein, oder, wie ebenfalls gezeigt, sich gegenüberliegen. Das Rohr kann kreisförmigen Querschnitt haben oder für eine bessere Durchflutung quadratischen. Durch ein Gitter 61 kann zusätzlich eine Elektroneneinschleusung erfolgen. In dem Beispiel nach Fig. 5 ragt eine Stabantenne 62 durch eine elektrische Isolierung 63 in das Rohr 64. Das äußere Ende der Stabantenne 62 trägt eine Spule 65 zur Hochfrequenzerzeugung. Fig. 6 und 7 zeigen durch Isolierungen 66 geteilte Rohrhälften 67, und zwar in Fig. 6 für ein rundes und in Fig. 7 für ein quadratisches Rohr, die je sich gegenüber liegende Hochfrequenzerzeuger 68 für eine totale Durchflutung der Rohre aufweisen.

## Patentansprüche

1. Verfahren zum Behandeln von umweltbelastende Bestandteile enthaltenden fließfähigen organischen Medien, insbesondere von Kohlenwasserstoffe enthaltenden Abfallstoffen, für eine getrennte Entsorgung und/oder weitere Aufbereitung dieser Bestandteile in verwertbare Produkte, dadurch bekennzeichnet, daß das fließfähige Medium in einem Einrohreaktor, dessen Verhältnis Länge zu Durchmesser wenigstens 200 : 1 beträgt und der eine Länge zwischen 10 und 2000 m, vorzugsweise zwischen 30 und 700 m und einen Durchmesser zwischen 5 und 500 mm, vorzugsweise zwischen 25 und 150 mm aufweist, in einem einzigen Erwärmungszyklus kontinuierlich in eine gasförmige Phase überführt wird, wobei unter gezielter Steuerung der Energiezufuhr und der Strömunsgeschwindigkeit aufgrund von Turbulenzen ein homogener Zustand über den gesamten Rohrquerschnitt erreicht wird, so daß jedes Molekül oder Atom gleichen Reaktionsbedingungen ausgesetzt und eine gesteuerte Spaltung, d.h. Auf- bzw. Abtrennung von Schadstoffteilen der Moleküle erreicht wird, daß erst an Ende des Erwärmungszyklus das gesamte Produkt nach Erreichen der höchsten Temperatur einem Kondensationsprozeß zugeführt wird und am Reaktorende aus dem Produkt eine Abscheidung der Rückstände erfolgt.

2. Verfahren nach Anspruch 1, dadurch gekennzeichnet, daß Moleküle gezielt gecrackt werden.

3. Verfahren nach einem der Ansprüche 1 und 2, dadurch gekennzeichnet, daß unerwünschte Molekülbestandteile, z. B. Chlor, abgespalten werden.

4. Verfahren nach Anspruch 2 oder 3, dadurch gekennzeichnet, daß die Behandlung mit Unterdruck durchgeführt wird.

5. Verfahren nach Anspruch 4, daß das Medium im Unterdruck verdüst wird.

6. Verfahren nach Anspruch 2 oder 3, dadurch gekennzeichnet, daß die Steuerung stufenweise auf die jeweils für die Abspaltung der Moleküle eines bestimmten Bestandteiles erforderliche Reaktionsbedingung erfolgt.

7. Verfahren nach einem der Ansprüche 1 bis 6, dadurch gekennzeichnet, daß mit Elementarteilchen beschossen wird.

8. Verfahren nach einen der Ansprüche 1 bis 7, dadurch gekennzeichnet, daß in den gasförmigen Medienstrom eine Abtrennung von Bestandteilen bewirkende Chemikalien eingebracht werden.

9. Verfahren nach einem der Ansprüche 1 bis 7, dadurch gekennzeichnet, daß reduzierende Stoffe in den gasförmigen Medienstrom eingebracht werden.

10. Verfahren nach einem der Ansprüche 1 bis 9, dadurch gekennzeichnet, daß das Medium in einem bereits gasförmigen Zustand dem Reaktor zugeführt wird.

11. Verfahren nach einem der Ansprüche 1 bis 10, dadurch gekennzeichnet, daß bei Verwendung von wenigstens zwei Strängen von mit dem Produkt gespeisten parallelen, von einer gemeinsamen Heizkammer umgebenen Reaktoren diese je für sich bezüglich einer der Einflußgrößen auf jeweils gleiche Austrittswerte geregelt werden.

12. Vorrichtung zum Durchführen des Verfahrens nach einem der Ansprüche 1 bis 11, gekennzeichnet durch die Kombination der folgenden Merkmale:
a) ein Einrohrreaktor (7,8) bestehend aus wenigstens einem Rohr, das ein Verhältnis Länge zu Durchmesser von wenigstens 200 : 1, vorzugsweise zwischen 400 : 1 und 3000 : 1 hat, dessen Länge zwischen 10 und 2000 m, vorzugsweise zwischen 30 und 700 m, und dessen Durchmesser zwischen 5 und 500 mm, vorzugsweise zwischen 25 und 150 mm liegt,
b) eine Einrichtung zum Fördern des Mediums durch den Einrohrreaktor,
c) eine Einrichtung zum Herbeiführen eines Energieaustausches über die Reaktorrohrwand,
d) Einrichtungen zum Regeln und Steuern wenigstens der Parameter Temperatur und Strömungsgeschwindigkeit des Mediums, derart, daß die höchste Produkttemperatur am Ende des Reaktors liegt,
e) ein am Reaktorende angeschlossener Rückständeabscheider (10) und
f) wenigstens ein im Bereich der höchsten Produkttemperatur angeordneter Kondensator (16,31,35).

13. Vorrichtung nach Anspruch 12 mit nur einem Reaktorstrang, dadurch gekennzeichnet, daß der Reaktorstrang (40) von wenigstens zwei aufeinanderfolgenden mit in Strömungsrichtung unterschiedlichen Temperaturen temperierbaren Heiz- bzw. Kühlkammern (41,42,43,44) umgeben ist und daß vor jeder Kammer eine Dosiervorrichtung (47,48,49,50) zum Eindosieren von Chemikalien in den jeweiligen Teil des Einrohrreaktorstranges vorgesehen ist.

14. Vorrichtung nach Anspruch 12 oder 13, dadurch gekennzeichnet, daß mehrere Einrohrreaktorstränge (7,8) von einer gemeinsamen Heizkammer (6) umschlossen sind und daß jeder einzelne Strang für sich hinsichtlich der Parameter Temperatur, Durchflußmenge oder chemische Sollwerte, z.B. pH-Wert, regelbar ist.

15. Vorrichtung nach einem der Ansprüche 12 bis 14, dadurch gekennzeichnet, daß eine Einrichtung zur Erzeugung einer elektromagnetischen hochfrequenten Schwingung im Rohr vorgesehen ist.

16. Vorrichtung nach einem der Ansprüche 12 bis 15, dadurch ge kennzeichnet, daß das Reaktorrohr wenigstens teilweise aus einem antimagnetischen Material gebildet ist und in diesem Bereich außen eine Magnetspule zum Erzeugen eines hochfrequenten elektromagnetischen Schwingungsfeldes im Rohr trägt.

17. Vorrichtung nach Anspruch 15, dadurch gekennzeichnet, daß das Rohr Fenster aus für Hochfrequenzschwingungen durchlässigem Material aufweist und außerhalb der Fenster Einrichtungen zur Erzeugung eines hochfrequenten elektromagnetischen Schwingungsfeldes im Rohr vorgesehen sind.

18. Vorrichtung nach Anspruch 15, dadurch gekennzeichnet, daß in das Rohr isoliert eine Stabantenne ragt, welche außen eine Einrichtung zur Erzeugung einer hochfrequenten Schwingung trägt.

## Claims

1. Process for treating free-flowing organic media containing environmentally harmful constituents, in particular waste materials containing hydrocarbons, for separate disposal and/or further processing of these constituents into utilisable products, characterised in that the free-flowing medium is converted continuously into a gaseous phase in a single heating cycle in a single-tube reactor the length to diameter ratio of which is at least 200 : 1 and which has a length of between 10 and 2000 m, preferably between 30 and 700 m and a diameter of between 5 and 500 mm, preferably between 25 and 150 mm, a homogeneous state being achieved over the entire cross section of the tube with selective control of the energy input and the flow rate as a result of turbulence, so that each molecule or atom is subjected to the same reaction conditions and controlled decomposition, i.e. separation of harmful parts of the molecules is achieved, that the entire product is only advanced to a condensation process at the end of the heating cycle once the maximum temperature has been reached and the residues are separated off from the product at the end of the reactor.

2. Process according to claim 1, characterised in that molecules are selectively cracked.

3. Process according to one of claims 1 and 2, characterised in that undesired molecule constituents, e.g. chlorine, are split off.

4. Process according to claim 2 or claim 3, characterised in that the treatment is carried out under negative pressure.

5. Process according to claim 4, characterised in that the medium is atomised under negative pressure.

6. Process according to claim 2 or claim 3, characterised in that control is effected in steps until the reaction condition required for splitting off the molecules of a specific constituent is achieved.

7. Process according to one of claims 1 to 6, characterised by bombardment with elementary particles.

8. Process according to one of claims 1 to 7, characterised in that chemicals causing the separation of constituents are introduced into the gaseous flow media.

9. Process according to one of claims 1 to 7, characterised in that reducing substances are introduced into the gaseous flow media.

10. Process according to one of claims 1 to 9, characterised in that the medium is supplied to the reactor in an already gaseous state.

11. Process according to one of claims 1 to 10, characterised in that when using at least two legs of parallel reactors fed with the product and surrounded by one common heating chamber, these are each themselves adjusted to the same outlet values in relation to one of the actuating variables.

12. Device for carrying out the process according to one of claims 1 to 11, characterised by the combination of the following features:
a) a single-tube reactor (7, 8) consisting of at least one tube having a length to diameter ratio of at least 200 : 1, preferably between 400 : 1 and 3000 : 1, the length of which is between 10 and 2000 m, preferably between 30 and 700 m, and the diameter of which is between 5 and 500 mm, preferably between 25 and 150 mm,
b) a means for conveying the medium through the single-tube reactor,
c) a means for causing energy exchange via the reactor tube wall,
d) means for controlling at least the parameters temperature and flow rate of the medium in such a manner that the maximum product temperature is at the end of the reactor,
e) a residue separator (10) connected to the end of the reactor and
f) at least one condenser (16, 31, 35) arranged in the region of the maximum product temperature.

13. Device according to claim 12 with only one reactor leg, characterised in that the reactor leg (40) is surrounded by at least two successive temperature-controllable heating or cooling chambers (41, 42, 43, 44) at different temperatures in the flow direction and that a metering device (47, 48, 49, 50) is provided in front of each chamber for adding chemicals to the respective part of the single-tube reactor leg.

14. Device according to claim 12 or claim 13, characterised in that several single-tube reactor legs (7, 8) are surrounded by one common heating chamber (6) and that each individual leg can be itself controlled with respect to the parameters temperature, flow rate or nominal chemical values, e.g. pH value.

15. Device according to one of claims 12 to 14, characterised in that a means is provided for producing electromagnetic high-frequency vibration in the tube.

16. Device according to one of claims 12 to 15, characterised in that the reactor tube is made at least partially of an antimagnetic material and is provided externally in this region with a magnetic coil for producing a high-frequency electromagnetic vibration field in the tube.

17. Device according to claim 15, characterised in that the tube has windows of material permeable to high-frequency vibrations and means for producing a high-frequency electromagnetic vibration field in the tube are provided outside the windows.

18. Device according to claim 15, characterised in that a bar antenna projects in an insulated manner into the tube and is provided externally with a means for producing high-frequency vibration.

## Revendications

1. Procédé pour le traitement d'agents organiques fluides contenant des composants polluants, en particulier de déchets contenant des hydrocarbures, pour une évacuation séparée et/ou une transformation ultérieure de ces composants en produits utilisables, caractérisé en ce que l'agent fluide est transformé en phase gazeuse en continu en un seul cycle de réchauffement dans un réacteur monotubulaire dont le rapport longueur-diamètre est d'au moins 200:1 et qui présente une longueur située entre 10 et 2000 m, de préférence entre 30 et 700 m, et un diamètre situé entre 5 et 500 mm, de préférence entre 25 et 150 mm, étant précisé qu'avec une commande appropriée de l'amenée d'énergie et de la vitesse d'écoulement, en raison des turbulences, on obtient un état homogène sur toute la section transversale du tube, de sorte que chaque molécule ou atome est exposé aux mêmes conditions de réaction et qu'on obtient une dissociation commandée, c'est-à-dire une séparation de parties toxiques de la molécule, en ce que tout le produit n'est amené vers un processus de condensation qu'à la fin du cycle de réchauffement, quand la température maximale a été atteinte, et une séparation des résidus a lieu à partir du produit à l'extrémité du réacteur.

2. Procédé selon la revendication 1, caractérisé en ce que des molécules sont soumises de façon appropriée au craquage.

3. Procédé selon l'une des revendications 1 et 2, caractérisé en ce que les composants de molécules indésirables comme le chlore, par exemple, sont éliminés.

4. Procédé selon la revendication 2 ou 3, caractérisé en ce que le traitement est effectué avec une dépression.

5. Procédé selon la revendication 4, caractérisé en ce que l'agent est injecté avec une dépression.

6. Procédé selon la revendication 2 ou 3, caractérisé en ce que la commande se fait par paliers jusqu'à la condition de réaction nécessaire pour la séparation des molécules d'un composant défini.

7. Procédé selon l'une des revendications 1 à 6, caractérisé en ce qu'un bombardement de particules élémentaires a lieu.

8. Procédé selon l'une des revendications 1 à 7, caractérisé en ce que des produits chimiques provoquant une séparation de composants sont introduits dans le courant d'agent gazeux.

9. Procédé selon l'une des revendications 1 à 7, caractérisé en ce que des substances réductrices sont introduites dans le courant d'agent gazeux.

10. Procédé selon l'une des revendications 1 à 9, caractérisé en ce que l'agent est amené vers le réacteur dans un état déjà gazeux.

11. Procédé selon l'une des revendications 1 à 10, caractérisé en ce que, quand on utilise au moins deux lignes de réacteurs parallèles alimentés en produit et entourés par une chambre de chauffe commune, ces réacteurs sont réglés individuellement, en ce qui concerne l'une des grandeurs d'influence, sur des valeurs de sortie égales.

12. Dispositif pour la mise en oeuvre du procédé selon l'une des revendications 1 à 11, caractérisé par la combinaison des attributs suivants :
a) un réacteur monotubulaire (7, 8) formé d'au moins un tube présentant un rapport longueur-diamètre d'au moins 200:1, de préférence situé entre 400:1 et 3000:1, dont la longueur est située entre 10 et 2000 m, de préférence entre 30 et 700 m, et dont le diamètre est situé entre 5 et 500 mm, de préférence entre 25 et 150 mm,
b) un dispositif pour acheminer l'agent à travers le réacteur monotubulaire,
c) un dispositif pour provoquer un échange d'énergie par l'intermédiaire de la paroi tubulaire du réacteur,
d) des dispositifs pour régler et commander au moins les paramètres de température et de vitesse d'écoulement de l'agent de telle sorte que la température de produit maximale se situe à l'extrémité du réacteur,
e) un séparateur de résidus (10) raccordé à l'extrémité du réacteur, et
f) au moins un condenseur (16, 31, 35) disposé dans la zone de la température de produit maximale.

13. Dispositif selon la revendication 12, comportant une seule ligne de réacteur, caractérisé en ce que la ligne de réacteur (40) est entourée par au moins deux chambres de chauffe ou de refroidissement successives (41, 42, 43, 44) aptes à être tempérées à des températures différentes dans le sens d'écoulement, et en ce qu'il est prévu, avant chaque chambre, un dispositif doseur (47, 48, 49, 50) pour le dosage de produits chimiques dans la partie correspondante de la ligne de réacteur monotubulaire.

14. Dispositif selon la revendication 12 ou 13, caractérisé en ce que plusieurs lignes de réacteur tubulaire (7, 8) sont entourées par une chambre de chauffe commune (6), et en ce que chaque ligne individuelle est réglable en soi en ce qui concerne les paramètres de température, de débit ou de valeurs de consigne chimiques comme la valeur pH, par exemple.

15. Dispositif selon l'une des revendications 12 à 14, caractérisé en ce qu'il est prévu un dispositif pour générer dans le tube une oscillation électromagnétique haute fréquence.

16. Dispositif selon l'une des revendications 12 à 15, caractérisé en ce que le tube de réacteur est formé au moins partiellement d'un matériau antimagnétique et porte dans cette zone, à l'extérieur, une bobine magnétique pour générer dans le tube un champ d'oscillations électromagnétique haute fréquence.

17. Dispositif selon la revendication 15, caractérisé en ce que le tube comporte des fenêtres en matériau laissant passer les oscillations haute fréquence, et il est prévu, en dehors des fenêtres, des dispositifs pour générer dans le tube un champ d'oscillations électromagnétique haute fréquence.

18. Dispositif selon la revendication 15, caractérisé en ce qu'une antenne tige pénètre, en étant isolée, dans le tube et porte, à l'extérieur, un dispositif pour générer une oscillation haute fréquence.
